Europäisches Patentamt

(19) European Patent Office

Office européen des brevets

(11) Publication number: **0 247 976**
**B1**

## (12) EUROPEAN PATENT SPECIFICATION

(45) Date of publication of the patent specification:
07.02.90

(21) Application number: 87830173.8

(22) Date of filing: 11.05.87

(51) Int. Cl.⁴: **F16H 63/08**

(54) **Motor vehicle gearbox.**

(30) Priority: 27.05.86 IT 6743586

(43) Date of publication of application:
02.12.87 Bulletin 87/49

(45) Publication of the grant of the patent:
07.02.90 Bulletin 90/6

(84) Designated Contracting States:
DE ES FR GB SE

(56) References cited:
DE-A- 3 016 909
DE-B- 1 125 730
GB-A- 1 418 764
GB-A- 2 014 672
GB-A- 2 097 493
GB-A- 2 161 555
US-A- 3 939 724

(73) Proprietor: FIAT AUTO S.p.A., Corso Giovanni
Agnelli 200, I-10135 Torino(IT)

(72) Inventor: Montanaro, Enrico, Via Frejus, 17,
I-10095 Grugliasco (Torino)(IT)

(74) Representative: Buzzi, Franco et al, c/o
Jacobacci-Casetta & Perani S.p.A. Via Alfieri, 17,
I-10121 Torino(IT)

## Description

The present invention refers in general to gearboxes having five forward ratios and one reverse ratio.

More particularly the invention relates to a gearbox having five ratios and reverse, in which an extra movement of the gear lever is provided for the engagement of reverse.

A gearbox of this type (see for example GB-A 2 014 672) includes a control rod supported by a support structure in a slidable and rotatable manner and having an outer end and an inner end carrying a selection and engagement member, the control rod being axially displaceable between four successive axial selection positions in the first of which it allows the selection of the first or second speed ratio, in the second the selection of the third or fourth speed ratio, in the third the selection of the fifth speed ratio, and in the fourth the selection of reverse, resilient means tending to maintain the control rod in the second axial position and the control rod being rotatable, in correspondence with the axial selection positions, into first or second opposite angular positions to obtain, respectively, the engagement of the first or second speed ratio, the third or fourth speed ratio, the fifth speed ratio and reverse.

In gearboxes of the type specified above the problem presents itself of avoiding accidental engagement of reverse with the control rod in the axial position of engagement of the fifth speed ratio, due to an incorrect movement of the gear lever by the driver.

The object of the present invention is that of realising a gearbox of the type defined above equipped with a safety device of simple and economic realisation and safe and reliable operation.

In order to achieve this object, the invention has for its subject a gearbox of the type initially specified, characterized in that it is provided with a safety device for avoiding accidental engagement of reverse with the control rod inthe axial position of engagement of the fifth speed ratio, comprising a catch appendage projecting radially from the control rod in the region of its outer end, and a locking member in the form of a bush traversed in a slidable and rotatable manner by the control rod and having an axial notch along which the catch appendage moves freely in an axial direction between the four axial selection positions of the control rod, the notch being shaped in such a manner to prevent angular displacement of the control rod from the angular position of engagement of the fifth speed ratio towards the angular position of engagement of reverse when the control rod is in the third axial selection position, and to allow this angular displacement for engagement of reverse only when the control rod is disposed in the fourth axial selection position.

The notch in the bush conveniently has a restriction in axial correspondence with the position assumed by the catch appendage in the third axial engagement position and in angular correspondence with the position assumed by the catch appendage in the angular position of engagement of reverse, and a widening in axial correspondence with the position assumed by the catch appendage in the fourth axial engagement position and in angular correspondence with the position assumed by the catch appendage in the angular position of engagement of reverse.

The catch appendage conveniently has a cylindrical form flattened on one side, and the widening of the notch is defined by a flat end surface of the bush above which the flattened side of the catch appendage is disposed in the reverse engagement position.

The invention will now be described in detail with reference to the appended drawings, provided by way of non-limiting example, in which:

Figure 1 is a partially-sectioned view of a part of a gearbox having five ratios and reverse provided with a safety device according to the invention,

Figure 2 is a partially-sectioned perspective view of a detail of Figure 1 on an enlarged scale,

Figure 3 is a diagramatic elevational view on the arrow III of Figure 2, and

Figure 4 is a cross-sectional view along the line IV-IV of Figure 2.

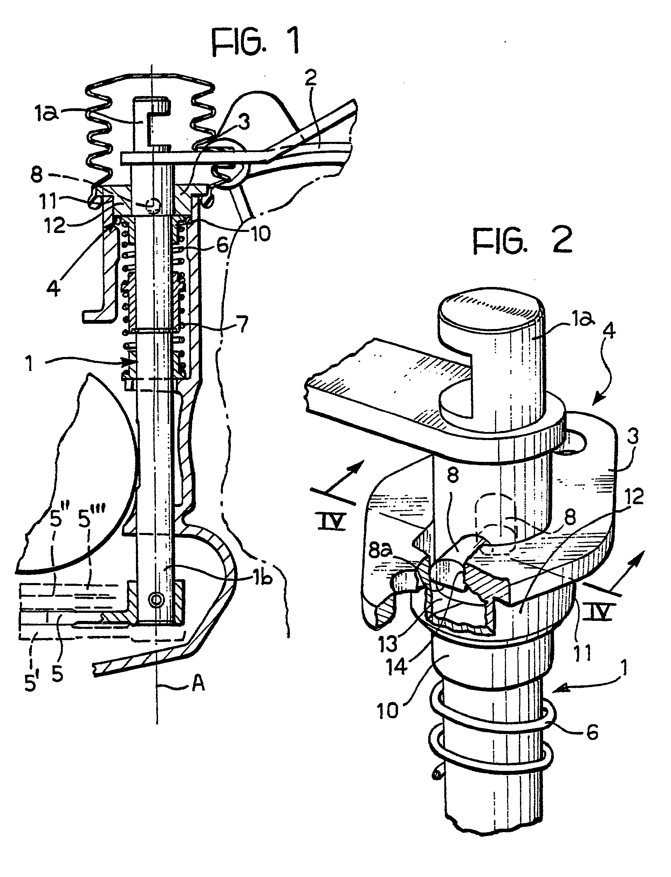

Figure 1 illustrates schematically a part of a motor vehicle gearbox having five forward speed ratios and one reverse speed ratio, the general configuration of which is conventional and, for brevity, will therefore not be described in detail. For the purposes of the present invention, it is sufficient to say that the gearbox comprises a series of pairs of gears always in mesh with one another and synchronizing devices for controlling the engagement of the various speed ratios operated by means of forks carried by three slidable engagement rods respectively for the engagement of the first or second ratio, the third or fourth ratio, the fifth ratio or reverse. These components are not illustrated for simplicity of representation in the drawings.

The displacement of the engagement rods is effected by means of a rod or control shaft 1 supported by the support structure (box 2) of the gearbox. The control rod 1 is translatable along its axis, indicated A, and rotatable about this axis by means of a manually-operated gear lever (not illustrated), in a manner known to an expert in the field.

The control rod 1 has an outer end 1a projecting outwardly of the structure 2 and rotatably mounted in and slidable through a bush 3 fixed to this structure 2 and forming part of a safety device 4 which will be described below, and an inner end 1b. This inner end 1b carries a radial finger 5 for operating, in a manner known in itself, the three engagement rods with their forks.

The control rod 1 is axially displaceable between four axial selection positions, the second of which is illustrated in Figure 1 and constitutes a stable position in that the control rod 1 is normally urged axially into this position by a pair of opposing helical return springs 6, 7. In this second axial position, which corresponds to selection of the third and fourth speed ratios, the radial finger 5 is disposed in the condition shown in continuous outline in Figure 1. Upon the axial translation of the control rod 1 from this position downwardly in Figure 1 it takes up the first axial selection position, whilst upon the translation of the rod 1 in the opposite direction (that is upwardly in Figure 1) it takes up the third and fourth axial selection positions. In the first, third and fourth axial selection positions, the radial finger 5 is disposed in the respective positions indicated 5′, 5″ and 5‴ in broken outline in Figure 1 and corresponding respectively to the selection of the first and second speed ratios, the fifth speed ratio, and reverse. In practice, then, in order to select reverse, the control rod 1 performs a supplementary axial movement with respect to the position for selection of the fifth speed ratio.

In the first and second axial selection positions the rotation of the control rod 1 in one sense or in the opposite sense allows one ratio or the other of the selected pair to be engaged. Thus, in the first selection position (position 5′ of the radial finger 5) it is possible to effect engagement of the first or second speed ratio, and in the second selection position (potion 5 of the radial finger 5) engagement of the third or fourth speed ratio. In the third axial selection position (position 5″ of the radial finger 5) engagement of the fifth speed ratio is obtained by rotating the control rod 1 in the sense corresponding to the engagement of the first and third speed ratios, whilst in the fourth axial selection position (position 5‴ of the radial finger 5) engagement of reverse is obtained by rotating the control rod 1 in the opposite sense, that is, in the sense corresponding to engagement of the second and fourth speed ratios.

The safety device 4 associated with the outer end region of the control rod 1 has the function of preventing the angular displacement of the fifth speed ratio towards the angular position of engagement of reverse when the control rod is in the third axial selection position (position 5″ of the radial finger 5), and to allow such angular displacement for engagement of reverse solely when the control rod 1 is disposed in the fourth axial selection position (position 5‴ of the radial finger 5). In practice, the function of the safety device 4 is that of avoiding accidental or unwanted engagement of reverse during forward motion of the vehicle in which the gearbox is mounted because of an incorrect movement of the gear lever by the driver, when the control rod is in the axial position of engagement of the fifth speed ratio. This safety device 4 includes, as well as the bush 3 which will be described in detail further on, a radial catch appendage 8 carried by the control rod 1 in the region of its outer end 1a, and more particularly, in the region corresponding to the bush 3.

As more visible in Figures 2 to 4, the catch appendage 8 is constituted by a pin force-fitted into a hole 9 of the rod 1 and having a generally cylindrical form with a flattened lower side 8a.

The bush 3 has a generally cylindrical form with a lower portion 10 functioning as a rest for the spring 6, an intermediate portion 11, and an upper widened portion 12 forming a flange for the fixing of the bush 3 to the structure 2 of the gearbox.

Opening into the cavity of the bush 3 is an inner axial notch 13 which extends along the intermediate portion 11 and upper portion 12 and along which the catch appendage 8 of the control rod 1 is free to move axially between the four axial selection positions of this rod 1.

The axial portion of the notch 13 corresponding to the axial position assumed by the catch appendage 8 in the first and second axial selection positions of the control rod 1 has a width such as to allow, in these axial positions, the free rotation of the catch appendage 8 in one sense or in the opposite sense corresponding respectively to the angular positions of the control rod 1 for engagement of the first or third and the second or fourth speed ratios. The portion of the notch 13 corresponding to the axial position assumed by the catch member 8 in the third axial selection position of the rod 1, however, has a restriction 14 with the function of preventing the angular displacement of the catch appendage 8, and therefore of the control rod 1, from the angular position corresponding to engagement of the fifth speed ratio towards the angular position of engagement of reverse just when the control rod is in the third axial selection position.

The axial notch 13 opens axially onto the upper flange portion 12 of the bush 3 in correspondence with the axial position assumed by the catch appendage 8 in the fourth axial selection position of the control rod 1. Therefore, when the control rod 1 is disposed in the fourth axial selection position, angular displacement for engagement of reverse is allowed because of which the flat surface 8a of the catch appendage 8 is disposed above the upper face of the flange portion 12 of the bush 3.

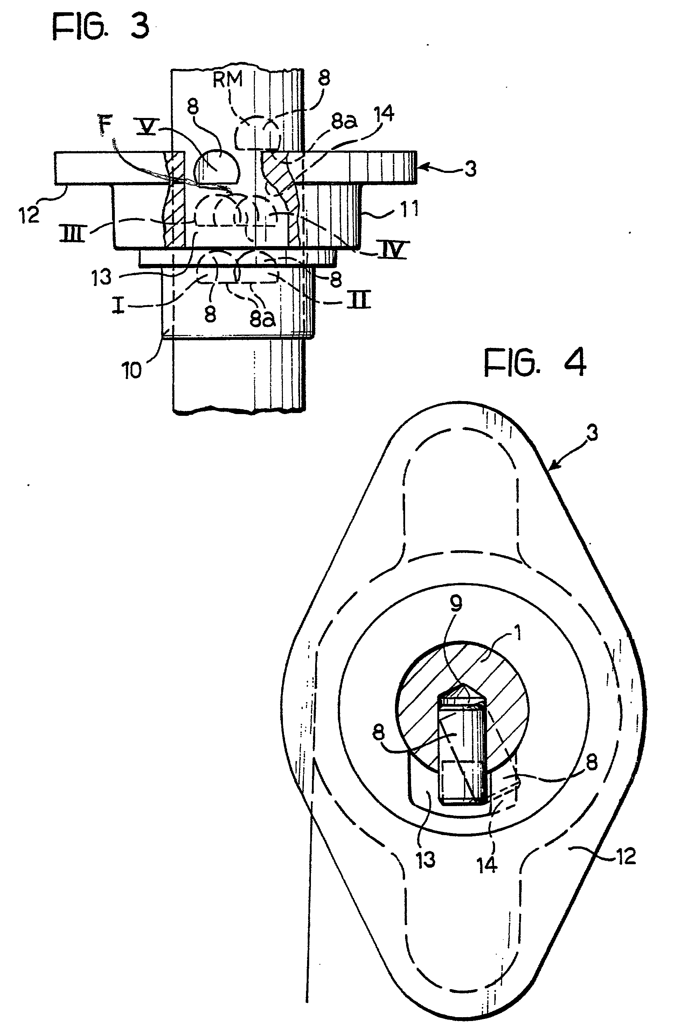

Figure 3 illustrates schematically the different relative positions of the catch bush 8 and the axial notch 13 of the bush 3 in correspondence with the different axial selection positions and angular engagement positions of the control rod 1. These positions, indicated I, II, III, F, IV, V, RM, correspond exactly to the conditions of engagement of the first, second and third speed ratios, to the neutral condition, and to the conditions of engagement of the fourth and fifth speed ratios and reverse, respectively. In Figures 2 and 4 the catch appendage 8 is illustrated in continuous outline in the neutral position F and in broken outline in the reverse engagement position RM.

## Claims

1. A gearbox having five forward speed ratios and one reverse speed ratio, comprising a control rod with the control rod in the axial supported by a support structure in a slidable and rotatable manner and having an outer end and an inner end carrying a selection and engagement member, the control rod with the control rod in the axial being axially displaceable between four successive axial selection positions in the first of which it allows selection of the first or second speed ratio, in the second the selection of the third or fourth speed ratio, in the third the selection of the fifth speed ratio and in the fourth the selection of reverse, resilient means tending to maintain the control rod with the control rod in the axial in the second axial position and the control rod with the control rod in the axial being rotatable in correspondence with the axial selection positions into first or second opposite angular positions to obtain, respectively, engagement of the first or second speed ratio, the third or fourth speed ratio, the fifth speed ratio and reverse (RM), characterised in that a safety device (4) is provided for avoiding accidental engagement of reverse with the control rod in the axial position of engagement of the fifth speed ratio, comprising a catch appendage (8) projecting radially from the control rod (1) in the region of its outer end (1a), and a locking member in the form of a bush (3) traversed slidably and rotatably by the control rod and having an axial notch (13) along which the catch appendage (8) moves freely in an axial direction between the four axial selection positions of the control rod (1), the notch (13) being shaped in such a way as to prevent angular displacement of the catch appendage (8) from the angular position of the control rod (1) corresponding to engagement of the fifth speed ratio towards the angular position of engagement of reverse when the control rod (1) is in the third axial selection position, and to allow this angular displacement for engagement of reverse only when the control rod (1) is disposed in the fourth axial selection position.

2. A gearbox according to Claim 1, characterised in that the notch (13) has a restriction (14) in axial correspondence with the position assumed by the catch appendage (8) in the third axial engagement position and in angular correspondence with the position assumed by the catch appendage (8) in the angular position of engagement of reverse, and a widening (12) in axial correspondence with the position assumed by the catch appendage (8) in the fourth axial engagement position and in angular correspondence with the position assumed by the catch appendage (8) in the angular position of engagement of reverse.

3. A gearbox according to Claim 2, characterised in that the catch appendage (8) has a cylindrical shape flattened on one side (8a) and the widening of the notch (13) is defined by a flat end surface (12) of the bush (3) above which the flattened side (8a) of the catch appendage (8) is disposed in the position of engagement of reverse.

**Patentansprüche**

1. Getriebe mit fünf Vorwärtsgängen und einem Rückwärtsgang mit einer Schaltstange (1), die gleitbar und drehbar in einer Lagerkonstruktion gelagert ist und ein äußeres und ein inneres Ende besitzt, die ein Wähl- und Schaltglied tragen, wobei die Schaltstange (1) in axialer Richtung zwischen vier aufeinanderfolgenden axialen Wählstellungen verschiebbar ist, von denen die erste der Wahl des ersten oder zweiten Gangs, die zweite der Wahl des dritten oder vierten Gangs, die dritte die der Wahl des fünften Gangs und die vierte die Wahl des Rückwärtsgangs zugeordnet ist, sowie mit federnden Mitteln, die die Schaltstange (1) in die zweite axiale Stellung vorspannen, wobei die Schaltstange (1) in den einzelnen axialen Wählstellungen zum Einlegen des ersten bzw. des zweiten, des dritten bzw. des vierten und des fünften bzw. des Rückwärtsgangs (RM) in eine erste oder eine zweite von zwei entgegengesetzten Winkelstellung drehbar ist, dadurch gekennzeichnet, daß eine Sicherheitsvorrichtung (4) vorgesehen ist, die ein versehentliches Einlegen des Rückwärtsgangs (RM) verhindert, wenn die Schaltstange (1) sich in der dem Einlegen des fünften Gangs entsprechenden axialen Stellung befindet, wobei diese Sicherheitsvorrichtung (4) einen Mitnehmeransatz (8) umfaßt, der im Bereich des äußeren Endes (1a) der Schaltstange (1) von dieser in radialer Richtung wegragt, sowie ein Sperrglied in Form einer Buchse (3), durch die die Schaltstange (1) gleitbar und drehbar hindurchtritt und die eine axiale Kerbe (13) besitzt, längs derer der Mitnehmeransatz (8) in axialer Richtung zwischen den vier axialen Wählstellungen der Schaltstange (1) frei bewegbar ist, wobei diese Kerbe (13) so geformt ist, daß sie eine Winkelverschiebung des Mitnehmeransatzes (8) aus der dem Einlegen des fünften Gangs entsprechenden Winkelstellung der Schaltstange (1) zu der dem Einlegen des Rückwärtsgangs entsprechenden Winkelstellung verhindert, wenn die Schaltstange (1) sich in der dritten axialen Wählstellung befindet, und eine solche Winkelverschiebung zum Einlegen des Rückwärtsgangs nur dann zuläßt, wenn die Schaltstange (1) sich in der vierten axialen Wählstellung befindet.

2. Getriebe nach Anspruch 1, dadurch gekennzeichnet, daß die Kerbe (13) eine Verengung (14) besitzt, deren axiale Position mit der Position übereinstimmt, die der Mitnehmeransatz (8) in der dritten axialen Schaltstellung einnimmt, und deren Winkelposition mit der Winkelposition übereinstimmt, die der Mitnehmeransatz (8) bei eingelegtem Rückwärtsgang einnimmt, und daß die Kerbe (13) ferner eine Erweiterung (12) besitzt, deren axiale Position mit der Position übereinstimmt, die der Mitnehmeransatz (8) in der vierten axialen Schaltstellung einnimmt, und deren Winkelposition mit der Winkelposition übereinstimmt, die der Mitnehmeransatz (8) bei eingelegtem Rückwärtsgang einnimmt.

3. Getriebe nach Anspruch 2, dadurch gekennzeichnet, daß der Mitnehmeransatz (8) eine auf einer Seite (8a) abgeflachte zylindrische Form hat und daß die genannte Erweiterung der Kerbe (13) von einer flachen Stirnfläche (12) der Buchse (3) begrenzt ist, über der bei eingelegtem Rückwärtsgang die abgeflachte Seite (8a) des Mitnehmeransatzes (8) angeordnet ist.

**Revendications**

1. Boîte de vitesses avec cinq rapports de vitesse en avant et un rapport de vitesse en arrière comprenant une tige de commande (1) supportée mobile en translation et en rotation par une structure porteuse, et possédant une extrémité extérieure et une extrémité intérieure qui porte un élément de sélection et d'engagement, la tige de commande (1) pouvant se déplacer axialement entre quatre positions axiales de sélection successives dans la première desquelles elle permet la sélection du premier ou du deuxième rapport, tandis que dans la deuxième, elle permet la sélection du troisième ou du quatrième rapport, dans la troisième, la sélection du cinquième rapport et, dans la quatrième, la sélection de la marche arrière, des moyens élastiques tendant à maintenir la tige de commande (1) dans la deuxième position axiale et la tige de commande (1) pouvant tourner, dans les positions axiales de sélection, pour prendre la première ou la deuxième des deux positions angulaires opposée servant à assurer respectivement l'engagement du premier ou du deuxième rapport, du troisième ou du quatrième rapport, du cinquième rapport et de la marche arrière (RM), caractérisée en ce qu'elle est équipée d'un dispositif de sécurité (4) destiné à éviter l'engagement accidentel de la marche arrière alors que la tige de commande se trouve dans la position axiale d'engagement du cinquième rapport, qui comprend un doigt d'arrêt (8) faisant saillie radiale sur la tige de commande (1) dans la région de son extrémité extérieure (1a) et un organ de blocage présentant la forme d'une douille (3) que la tige de commande traverse libre en translation et en rotation, et qui présente une encoche axiale (13) le long de laquelle le doigt d'arrêt (8) se déplace librement dans la direction axiale entre les quatre positions axiales de sélection de la tige de commande (1), l'encoche (13) étant façonnée de façon à empêcher le déplacement angulaire du doigt d'arrêt (8) de la position angulaire de la tige de commande qui correspond à l'engagement du cinquième rapport vers la position angulaire d'engagement de la marche arrière lorsque la tige de commande (1) se trouve dans la troisième position axiale de selection, et à autoriser ce déplacement angulaire pour l'engagement de la marche arrière uniquement lorsque la tige de commande (1) est placée dans la quatrième position de sélection axiale.

2. Boîte de vitesses selon la revendication 1, caractérisée en ce que l'encoche (13) présente un étranglement (14) en coïncidence axiale avec la position prise par le doigt d'arrêt (8) dans la troisième position axiale d'engagement et en coïncidence angulaire avec la position prise par le doigt d'arrêt (8) dans la position angulaire d'engagement de la marche arrière, et un élargissement (12) en coïncidence axiale avec la position prise par le doigt d'arrêt (8) dans la quatrième position axiale d'engagement et en coïncidence angulaire avec la position prise par le doigt d'arrêt (8) dans la position angulaire d'engagement de la marche arrière.

3. Boîte de vitesses selon la revendication 2, caractérisée en ce que le doigt d'arrêt (8) possède une forme cylindrique aplatie sur un côté (8a) et l'elargissement de l'encoche (13) est défini par une surface terminale plate (12) de la douille (3), au-dessus de laquelle le côté aplati (8a) du doigt d'arrêt (8) est placé dans la position d'engagement de la marche arrière.

FIG. 1

FIG. 2

FIG. 3

FIG. 4